(19) Europäisches Patentamt European Patent Office Office européen des brevets

(11) **EP 3 909 916 B1**

(12) **EUROPEAN PATENT SPECIFICATION**

(45) Date of publication and mention of the grant of the patent:
**28.06.2023 Bulletin 2023/26**

(21) Application number: **20871547.4**

(22) Date of filing: **29.09.2020**

(51) International Patent Classification (IPC):
*C01G 53/00* (2006.01)    *H01M 4/525* (2010.01)
*H01M 4/505* (2010.01)    *H01M 10/052* (2010.01)

(52) Cooperative Patent Classification (CPC):
**C01G 53/50; C01G 53/006; H01M 4/525;**
C01P 2002/54; C01P 2004/03; C01P 2004/51;
C01P 2004/61; C01P 2006/11; C01P 2006/12;
C01P 2006/40; Y02E 60/10

(86) International application number:
**PCT/KR2020/013419**

(87) International publication number:
**WO 2021/066574 (08.04.2021 Gazette 2021/14)**

(54) **POSITIVE ELECTRODE ACTIVE MATERIAL FOR LITHIUM SECONDARY BATTERY AND METHOD FOR PREPARING SAID POSITIVE ELECTRODE ACTIVE MATERIAL**

POSITIV ELEKTRODENAKTIVMATERIAL FÜR LITHIUM-SEKUNDÄRBATTERIE UND VERFAHREN ZUR HERSTELLUNG DES POSITIV ELEKTRODENAKTIVMATERIALS

MATÉRIAU ACTIF D'ÉLECTRODE POSITIVE POUR UNE BATTERIE SECONDAIRE AU LITHIUM ET PROCÉDÉ DE PRÉPARATION DE MATÉRIAU ACTIF D'ÉLECTRODE POSITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2019 KR 20190122545**

(43) Date of publication of application:
**17.11.2021 Bulletin 2021/46**

(73) Proprietor: **LG Chem, Ltd.**
**Seoul 07336, (KR)**

(72) Inventors:
• **SHIN, Ho Suk**
 **Daejeon 34122 (KR)**
• **KIM, Won Tae**
 **Daejeon 34122 (KR)**

• **YU, Jong Yeol**
 **Daejeon 34122 (KR)**
• **LIM, Young Geun**
 **Daejeon 34122 (KR)**
• **SHIN, Sun Sik**
 **Daejeon 34122 (KR)**
• **HA, Seoung Chul**
 **Daejeon 34122 (KR)**

(74) Representative: **Hoffmann Eitle**
**Patent- und Rechtsanwälte PartmbB**
**Arabellastraße 30**
**81925 München (DE)**

(56) References cited:
JP-A- 2012 004 109    KR-A- 20030 038 308
KR-A- 20120 027 707    KR-A- 20160 118 081
KR-A- 20170 022 990

**Description**

## TECHNICAL FIELD

The present invention relates to a positive electrode active material for a lithium secondary battery, a method for preparing the positive electrode active material, a positive electrode for a lithium secondary battery including the positive electrode active material, and a lithium secondary battery.

## BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Recently, studies on increasing capacity and decreasing the charge/discharge time of such a lithium secondary battery is being actively carried out.

Lithium transition metal composite oxides have been used as a positive electrode active material of a typical lithium secondary battery, and among these, a lithium cobalt composite metal oxide such as $LiCoO_2$ has a high functional voltage, and can react even in a high current as lithium ions are effectively deintercalated during high-speed charging, thereby providing a positive electrode active material having excellent charging efficiency. However, since the $LiCoO_2$ has poor thermal properties due to an unstable crystal structure caused by delithiation and particularly uses expensive cobalt, there has been a limitation in using a large amount of the $LiCoO_2$ as a power source for applications such as electric vehicles.

Recently, as electric vehicles are rapidly being popularized, the performance of a secondary battery which can be used as a power source of a medium and large sized device is considered very important. In particular, the main limitation of the electric vehicles compared to vehicles having a conventionally used engine is that it takes a long time to be charged.

Therefore, development on a positive electrode active material for a secondary battery, which can be rapidly charged and does not degrade the performance of the secondary battery during rapid charging, is being required.

Patent Document 2 relates to a positive active material comprising lithium-manganese composite oxide particles, a porous glass-based inorganic material layer covering surfaces of the lithium-manganese composite oxide particles, and conductive material particles dispersed in pores of the glass-based inorganic material layer.

Patent Document 3 describes a positive electrode active material having a core portion including a lithium transition metal oxide, and a porous phosphoric acid coating layer formed on the surface of the core portion and including a plurality of pores, wherein the average diameter of the pores contained in the porous phosphoric acid coating layer is 10 nm to 2 $\mu$m and the internal porosity of the porous phosphoric acid coating layer is 5% to 20% by weight of the positive electrode active material.

<Prior Art Document>

(Patent Document 1) Korean Patent No. 1395846
(Patent Document 2) KR 2012-0027707 A
(Patent Document 3) KR 2016-0118081 A

## DISCLOSURE OF THE INVENTION

## TECHNICAL PROBLEM

An aspect of the present invention provides a method for preparing a positive electrode active material which can suppress performance degradation of a secondary battery during rapid charging and improve output characteristics.

Another aspect of the present invention provides the positive electrode active material.

Another aspect of the present invention provides a positive electrode for a lithium secondary battery including the positive electrode active material.

Another aspect of the present invention provides a lithium secondary battery including the positive electrode.

## TECHNICAL SOLUTION

According to an aspect of the present invention, there is provided a method for preparing a positive electrode active material, the method including: a first step of adding to a reactor, a reaction solution including a transition metal-containing solution containing at least one among nickel, cobalt, and manganese, an ammonium ion-containing solution, and a basic aqueous solution to form seeds of precursor particles; a second step of preparing carbon-introduced precursor particles by adding a carbon source to the reactor when the precursor particles grow until an average particle diameter ($D_{50}$) of the precursor particles is 30% or greater in size of the average particle diameter ($D_{50}$) of the finally prepared precursor particles; and a third step of mixing the carbon-introduced precursor particles and a lithium raw material and sintering the mixture at a temperature of 750 °C to 950 °C to prepare positive electrode active material particles, wherein the carbon introduced to the precursor particles is volatilized by the sintering of the third step to form cavities in the positive electrode active material particles, and a cavity ratio of the positive electrode active material is 5-20%, wherein cavities are empty spaces formed while carbon introduced to precursor particles is volatilized, the cavity ratio is a ratio of area for which the cavities account with respect to the cross-sectional area of the positive electrode active material particle and is measured as described below, the carbon source is added so that the carbon compound is 20 vol% or less with respect to 100 vol% of total precursor particles, and the carbon compound has an average particle diameter (D50) of 10 nm to 1 μm.

According to another aspect of the present invention, there is provided a positive electrode active material obtainable by the method of the present invention which includes a lithium transition metal oxide and contains cavities in a region within a distance of 0.3R or more from a center of the particle when the distance from the center of the particle to the surface of the particle is R, and has a cavity ratio of 5% to 20%, wherein cavities are empty spaces formed while carbon introduced to precursor particles is volatilized, and the cavity ratio is a ratio of area for which the cavities account with respect to the cross-sectional area of the positive electrode active material particle and is measured as described below.

According to another aspect of the present invention, there is provided a positive electrode for a lithium secondary battery which includes the above positive electrode active material.

According to another aspect of the present invention, there is provided a lithium secondary battery which includes the positive electrode for a secondary battery.

## ADVANTAGEOUS EFFECTS

According to the present invention, the surface area of the positive electrode active material particles is increased to maximize the contact area between a positive electrode active material and an electrolyte solution, and thereby performance degradation of lifetime and resistance characteristics may be minimized during rapid charging, as well as output characteristics may be improved.

## BRIEF DESCRIPTION OF THE DRAWINGS

FIG. 1 is a cross-sectional scanning electron microscope (SEM) photograph of a positive electrode active material precursor particle prepared in Example 1;

FIG. 2 is a cross-sectional SEM photograph of a positive electrode active material in Example 1;

FIG. 3 is a cross-sectional SEM photograph of a positive electrode active material precursor particle prepared in Comparative Example 1; and

FIG. 4 is a cross-sectional SEM photograph of a positive electrode active material particle prepared in Comparative Example 1.

## BEST MODE FOR CARRYING OUT THE INVENTION

Hereinafter, the present invention will be described in more detail.

The terms "cavity" herein refers to an empty space formed while carbon introduced to precursor particles is volatilized, which means a macropore having a diameter of about 10 nm to 1 μm, and preferably about 20 nm to 500 nm.

The term "cavity ratio" herein refers to a ratio of area for which the cavities in the cross-section of the positive electrode active material particle accounts, and the cavity ratio is measured by cutting positive electrode active material particles by using focused ion-beam, followed by taking a cross-sectional image by using a scanning electron microscope, and then calculating the ratio of total area of the cavity with respect to the cross-sectional area of the positive electrode active material particle by using the cross-sectional image.

The expression "average particle diameter ($D_{50}$)" herein may be defined as a particle diameter at a cumulative volume of 50% in a particle diameter distribution curve. The average particle diameter ($D_{50}$), for example, may be measured by using a laser diffraction method. The laser diffraction method may generally measure a particle diameter ranging from a submicron level to a few mm, and may obtain highly repeatable and high resolution results.

Throughout the present specification, a tap density means an apparent density of a powder obtained by vibrating a container under certain conditions when being filled with powders, and may be calculated by using a typical tap density tester, and particularly, may be calculated according to ASTM B527-06 by using TAP-2S (Logan Instruments Corp.).

## Method for Preparing Positive Electrode Active Material

The inventors have discovered that when preparing a positive electrode active material precursor, a carbon source is added to a reactor at a particular time point to prepare carbon-introduced precursor particles, and the carbon introduced to the precursor particles is volatilized during sintering to form cavities in the positive electrode active material particles, and thus output characteristics during rapid charging may be improved by maximizing the reaction between a positive electrode active material and an electrolyte solution, thereby leading to the completion of the present invention.

Specifically, a method for preparing a positive electrode active material according to the present invention, the method including: a first step of adding to a reactor, a reaction solution including a transition metal-containing solution containing at least one among nickel, cobalt, and manganese, an ammonium ion-containing solution, and a basic aqueous solution to form seeds of precursor particles; a second step of preparing carbon-introduced precursor particles by adding a carbon source to the reactor when the precursor particles grow until an average particle diameter ($D_{50}$) of the precursor particles is 30% or greater in size of the average particle diameter ($D_{50}$) of the finally prepared precursor particles; and a third step of mixing the carbon-introduced precursor particles and a lithium raw material and sintering the mixture at a temperature of 750 °C to 950 °C to prepare positive electrode active material particles. In this case, the carbon introduced to the precursor particles is volatilized by the sintering of the third step to form cavities in the positive electrode active material particles.

The cavity ratio of the positive electrode active material according to the present invention is 5% to 20%.

Hereinafter, a method for preparing a positive electrode active material according to the present invention will be described in more detail.

First, to a reactor, a reaction solution including: a transition metal-containing solution containing at least one among nickel, cobalt, and manganese; an ammonium ion-containing solution; and a basic aqueous solution is added to form seeds of precursor particles (the first step).

The transition metal-containing solution contains cations of at least one transition metal selected from the group consisting of nickel, manganese, and cobalt.

For example, the transition metal-containing solution may contain 40 to 90 mol% of nickel, 5 to 30 mol% of cobalt, and 5 to 30 mol% of manganese, and preferably, 60 to 90 mol% of nickel, 5 to 20 mol% of cobalt, and 5 to 20 mol% of manganese.

The transition metal-containing solution may include acetic acid salts, nitrates, sulfates, halides, sulfides, hydroxides, oxides, or oxyhydroxides of the above transition metals, and these materials are not particularly limited as long as they may be dissolved in water.

For example, the nickel (Ni) may be included as $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, a nickel halide or the like in the transition metal-containing solution, and at least one thereof may be used.

In addition, the cobalt (Co) may be included as $Co(OH)_2$, $CoOOH$, $Co(OCOCH_3)_2 \cdot 4H_2O$, $Co(NO_3)_2 \cdot 6H_2O$, $Co(SO_4)_2 \cdot 7H_2O$, or the like in the transition metal-containing solution, and at least one thereof may be used.

Furthermore, the manganese (Mn) may be included as a manganese oxide such as $Mn_2O_3$, $MnO_2$, and $Mn_3O_4$; a manganese salt such as $MnCO_3$, $Mn(NO_3)_2$, $MnSO_4$, manganese acetate, manganese dicarboxylate, manganese citrate, and a fatty acid manganese salt; an oxyhydroxide, manganese chloride, and the like in the transition metal-containing solution, and at least one thereof may be used.

The basic aqueous solution may include at least one selected from the group consisting of NaOH, KOH, and $Ca(OH)_2$, and water or a mixture of water and an organic solvent (specifically, alcohol etc.), which may be uniformly mixed with the water, may be used as a solvent. In this case, the basic aqueous solution may have a concentration of 2 M to 8 M, and preferably 3 M to 5.5 M. In the case in which the basic aqueous solution has a concentration of 2 M to 8 M, uniform sized precursor particles may be formed, formation time of the precursor particles may be fast, and a yield may also be excellent.

The ammonium ion-containing solution may include at least one selected from the group consisting of $NH_4OH$, $(NH_4)_2SO_4$, $NH_4NO_3$, $NH_4Cl$, $CH_3COONH_4$, and $NH_4CO_3$. In this case, water or a mixture of water and an organic solvent (specifically, alcohol etc.), which may be uniformly mixed with the water, may be used as a solvent.

Specifically, the basic aqueous solution and the ammonium ion-containing solution are first added to the reactor to adjust the pH to be in a range of 11 to 14, preferably, 11.5 to 13, and, thereafter, particle seeds may be formed while adding the transition metal-containing solution into the reactor. In this case, since the pH value in a first reactor changes as the particle seeds are formed by the addition of the transition metal-containing solution, the pH value may be controlled to be maintained at 11 to 14 by continuously adding the ammonium ion-containing solution and the basic aqueous solution together with the transition metal-containing solution.

Then, when the precursor particles grow until an average particle diameter ($D_{50}$) of the precursor particles is 30% or greater in size of the average particle diameter ($D_{50}$) of the finally prepared precursor particles, a carbon source is added to the reactor to prepare carbon-introduced precursor particles (the second step).

When the seeds of the precursor particles are formed through the first step, the pH of the reaction solution is changed to grow the precursor particles.

In this case, the pH control in the reactor may be achieved by adjusting the injected amount of the basic aqueous solution and the ammonium ion-containing solution. For example, the pH in the reactor may be adjusted to be in a range of 10 to 12.5, and preferably 10.5 to 12, thereby growing the precursor particles.

Then, when the average particle diameter ($D_{50}$) of the precursor particles reaches 30% or greater in size of the average particle diameter ($D_{50}$) of the finally prepared precursor particles, a carbon source is added to the reactor to prepare carbon-introduced precursor particles.

For example, if the average particle diameter ($D_{50}$) of the finally prepared precursor particles is 2 to 20 $\mu$m, and preferably 5 to 15 um, when the average particle diameter ($D_{50}$) of the precursor particles is grown to 1 to 7 $\mu$m, and preferably 2 to 5 $\mu$m, the carbon source is added to the reactor.

If the precursor particles are not grown and the carbon source is added together in the first step which is a step of forming the precursor seeds to prepare the precursor particles, since the carbon source prevents the aggregation of the precursors, the growth of particles may be suppressed. In addition, if the carbon source is added in the beginning of the reaction, cavity formation area broadens to adversely affect characteristics such as energy density.

According to the present invention, the carbon source may include at least one carbon compound selected from the group consisting of carbon black, acetylene black, Ketjen black, channel black, furnace black, lamp black, thermal black, carbon fibers, and carbon nanotubes, and the carbon compound having an average particle diameter ($D_{50}$) of 10 nm to 1 um and preferably 20 nm to 500 nm is used.

If the average particle diameter of the carbon compound included in the carbon source satisfies the above range, when synthesizing precursors, the carbon source may be aggregated with primary precursor particles, and the precursor particles may grow to a desired size, and the carbon source may be present inside the finally prepared positive electrode active material precursor particles. If the average particle diameter of the carbon compound gets out of the above-described range, primary precursor particles smaller than the carbon compound are attached around the carbon source, and thus after the sintering, cavity is not formed inside the positive electrode active material.

The carbon source is added so that a carbon-based compound is 5 to 20 vol%, and preferably 5 to 15 vol% with respect to 100 vol% of total precursor particles. If the content of the carbon source satisfies the above range, after the sintering, cavity with a suitable volume can be contained inside the positive electrode active material while minimizing the loss of the tap density of the precursor particles. If the content of the carbon source gets out of the above range and exceeds 20 vol%, cavity may be formed excessively to lead to an excessive decrease in the tap density of the positive electrode active material precursor particles and positive electrode active material particles. In addition, if the content of the carbon source is less than 5 vol%, cavity formation is not sufficient, and thus during rapid charging, an effect of improving lifetime and resistance characteristics is insignificant.

Finally, the carbon-introduced precursor particles and a lithium raw material are mixed and sintered at a temperature of 750 °C to 950 °C to prepare positive electrode active material particles (the third step).

For example, lithium carbonate ($Li_2CO_3$) or lithium hydroxide (LiOH) may be used as the lithium-containing raw material, and the positive electrode active material precursor and the lithium-containing raw material may be mixed so that the molar ratio of transition metal:Li becomes 1:1.0 to 1:1.1. In a case in which the lithium-containing raw material is mixed in a ratio less than the above range, capacity of the prepared positive electrode active material may be reduced, and, in a case in which the lithium-containing raw material is mixed in a ratio greater than the above range, since particles are sintered during a sintering process, the preparation of the positive electrode active material may be difficult, the capacity may be reduced, and separation of the positive electrode active material particles (causing the positive electrode active material aggregation phenomenon) may occur after the sintering.

In addition, when the carbon-introduced precursor particles and the lithium raw material are mixed, doping element (M)-containing raw material may be further included as necessary. In this case, the M may include at least one selected from the group consisting of Al, Zr, and W.

For example, at least one selected from the group consisting of acetic acid salts, nitrates, sulfates, halides, sulfides, hydroxides, oxides, or oxyhydroxides, which contain the metal element (M), may be used as the metal element (M)-containing raw material.

If the doping element (M) is further added, effects of improving lifetime and output characteristics may be achieved.

According to the present invention, the carbon-introduced precursor particles, the lithium raw material, and the doping element (M)-containing raw material as necessary may be mixed and the sintering process may be carried out at a temperature of 750 °C to 950 °C, and preferably, 800 °C to 900 °C. In a case in which the sintering temperature is less than 750 °C, since the raw materials may remain in the particles due to an insufficient reaction, high-temperature stability of the battery may be reduced and structural stability may be reduced due to decreases in volume density and crystallinity. In a case in which the sintering temperature is greater than 950 °C, non-uniform growth of the particles may occur, and, since a size of the particles is excessively increased to reduce an amount of the particles per unit area, volume capacity of the battery may be reduced. In consideration of the particle size control, capacity, and stability of the prepared positive electrode active material particles and a reduction in lithium-containing by-products, the sintering temperature may be more preferably in a range of 800 °C to 900 °C.

According to the present invention, the carbon of the carbon-introduced precursor particles is bonded to an oxygen to convert into $CO_2$, the $CO_2$ is volatilized at a temperature of 450 °C to 700 °C, and a cavity is formed at a carbon site. Therefore, the positive electrode active material prepared after performing the sintering process includes the cavity formed by the volatilization of the carbon.

Meanwhile, the positive electrode active material prepared according to the present invention has a cavity ratio, a ratio of area for which the cavities account with respect to the cross-sectional area of the positive electrode active material particle, of 5 to 20%, and preferably 5 to 15%. If the cavity ratio is less than 5%, effects of increasing surface area and improving electrolyte permeation are insignificant, and if the cavity ratio is greater than 20%, the energy density is reduced, and thus capacity and output characteristics may be reduced.

## Positive Electrode Active Material

Next, a positive electrode active material according to the present invention will be described.

The positive electrode active material of the present invention includes a lithium transition metal oxide, and contains cavities in a region within a distance of 0.3R to R from the center of the particle when the distance from the center of the positive electrode active material to the surface is R, and a cavity ratio of the positive electrode active material is 5% to 20%.

The positive electrode active material prepared according to the above-described method of the present invention includes cavities in a region within a distance of 0.3R or more from the center of the particle when the distance from the center of the particle to the surface is R.

Specifically, according to the present invention, since the carbon source is not added when forming the seeds of the precursor particles, but added when the size of the precursor particles reaches 30% or greater of the size of the finally prepared particles, the carbon is primarily introduced in a region within a distance of 0.3R or more from the center of the precursor particle, and thus the cavity, which is formed after the carbon is volatilized, is primarily formed in a region within a distance of 0.3R or more from the center of the particle. If the cavities are included in the region within a distance of 0.3R or more from the center of the particle as the present invention, the impregnation of the electrolyte solution is smoothly carried out, and thus an excellent effect of improving the battery performance may be obtained.

Also, the positive electrode active material of the present invention has a cavity ratio of 5% to 20%, and preferably 5% to 15%. The positive electrode active material according to the present invention having the cavity ratio as above has a specific surface area higher than that of a conventional positive electrode active material. Specifically, the positive electrode active material of the present invention may represent a Brunauer-Emmett-Teller (BET) specific surface area of 110% to 150% over that of the conventional positive electrode active material without including cavities. Like this, when the specific surface area increases, reaction area between the positive electrode active material and the electrolyte solution is maximized, and thus the output characteristics may be improved even though rapid charging is performed.

Meanwhile, the cavity may have a diameter of 10 nm to 1 $\mu$m, and preferably 20 nm to 500 nm. If the cavity diameter is too small, an effect of improving a specific surface area is insignificant, and if the cavity diameter is too large, physical properties such as energy density and tap density may be deteriorated.

The positive electrode active material according to the present invention may have an average particle diameter ($D_{50}$) of 2 um to 20 $\mu$m, and preferably 4 um to 20 $\mu$m.

According to the present invention, the positive electrode active material may have a tap density of 1.0 g/cc to 4.0 g/cc, and preferably 1.5 g/cc to 3.5 g/cc. If the positive electrode active material shows the above-described tap density, the reaction between the electrolyte solution and the positive electrode active material particles may be facilitated due to the cavity formation while the energy density of the particles is not reduced.

## Positive Electrode

Also, the present invention provides a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500pm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder, together with the positive electrode active material.

In this case, the positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, and any conductive agent may be used without particular limitation as long as it has electron conductivity without causing adverse chemical changes in the battery to be constituted. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 to 30 wt% based on the total weight of the positive electrode active material layer.

The binder serves to improve the bonding between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be manufactured according to a typical method for manufacturing a positive electrode except that the above-described positive electrode active material is used. Specifically, a composition for forming a positive electrode active material layer, which is prepared by dissolving or dispersing the positive electrode active material as well as selectively the binder and the conductive agent in a solvent, is coated on the positive electrode collector, and the positive electrode may then be manufactured by drying and rolling the coated positive electrode collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Also, the present invention may prepare an electrochemical device including the positive electrode. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Furthermore, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 um to 500 $\mu$m, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiOp(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on based on 100 parts by weight of a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may include an acrylic copolymer, polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive agent is a component for further improving conductivity of the negative electrode active material, wherein the conductive agent may be added in an amount of 10 parts by weight or less, for example, 5 parts by weight or less based on 100 parts by weight of the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide whiskers and potassium titanate whiskers; a conductive metal oxide such as titanium oxide; or a conductive material such as a polyphenylene derivative, and the like may be used.

For example, the negative electrode active material layer may be prepared by coating a composition for forming a negative electrode, which is prepared by dissolving or dispersing selectively the binder and the conductive agent as well as the negative electrode active material in a solvent, on the negative electrode collector and drying the coated negative electrode collector, or may be prepared by casting the composition for forming a negative electrode on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Also, a coated separator including a ceramic component or a polymer material may be used to secure heat resistance or mechanical strength, and may be selectively used in a single-layered or a multi-layered structure.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used during the preparation of a lithium secondary battery, but the electrolyte is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the performance of the electrolyte solution may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used as the lithium salt. The lithium salt may be used in a concentration range of 0.1 M to 2.0 M. When the concentration of the lithium salt is in the above range, the electrolyte may have suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 part by weight to 5 parts by weight based on 100 parts by weight of a total weight of the electrolyte.

The lithium secondary battery including the positive electrode active material according to the present invention as describe above stably exhibits excellent discharge capacity, output properties, and lifespan properties, and thus, are useful for portable devices such as a mobile phone, a notebook computer, and a digital camera, and in the field of electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Example 1

$NiSO_4$, $CoSO_4$, and $MnSO_4$ were mixed in distilled water in an amount to have a molar ratio of nickel:cobalt:manganese of 85:5:10 to prepare a 2.2 M transition metal-containing solution.

A container containing the transition metal-containing solution was connected to a 20 L reactor. In addition, a 4 M NaOH solution and a 15% $NH_4OH$ aqueous solution were prepared and connected to the reactor, respectively.

After 10 L of deionized water was put in a 20 L reactor that is set to 55 °C, the reactor was purged with nitrogen gas at a rate of 20 L/min to remove dissolved oxygen in the water and create a non-oxidizing atmosphere in the reactor. Then, 100 mL of an NaOH aqueous solution at a concentration of 20 wt% and 100 to 160 mL of an $NH_4OH$ aqueous solution at a concentration of 15 wt% were added in the reactor and the pH in the reactor was adjusted to 12.5.

Thereafter, the transition metal-containing solution was added in the reactor at a rate of 1 L/hr, and the $NH_4OH$ aqueous solution at a rate of 100 mL/hr, and the NaOH aqueous solution was added, and the reaction solution was subjected to a co-precipitation reaction for 120 minutes while maintaining the pH of the reaction solution at 11.5 to 12 to form seeds of nickel cobalt manganese hydroxide particles.

Then, an addition rate of the NaOH aqueous solution to be added in the reactor was adjusted to maintain the pH at 11.5 and proceed a reaction for 120 minutes, and thus the nickel cobalt manganese particles were grown to have an average particle diameter ($D_{50}$) of 3.5 $\mu$m.

When the average particle diameter ($D_{50}$) of the nickel cobalt manganese particles became 3.5 um, while the addition amounts of the transition metal-containing solution, the NaOH aqueous solution, and the $NH_4OH$ aqueous solution were maintained and a suspension of acetylene black (SB50L from Denka Co., Ltd.) having an average particle diameter ($D_{50}$) of 50 nm as a carbon source was added to the reactor at a rate of 50 mL/hr, the reaction solution was subjected to a co-precipitation reaction for 1,500 minutes to prepare the positive electrode active material precursor having an average particle diameter ($D_{50}$) of 10 $\mu$m.

Then, the positive electrode active material precursor was mixed with LiOH so that the molar ratio of Li:Me is 1.06:1, and the resulting mixture was sintered at 790 °C for 20 hours to prepare a lithium transition metal oxide represented by $Li_{1.06}[Ni_{0.85}Co_{0.05}Mn_{0.10}]O_2$.

### Example 2

A lithium transition metal oxide was prepared in the same manner as in Example 1 except that the carbon source was added at an addition rate of 70 mL/hr.

### Example 3

A lithium transition metal oxide was prepared in the same manner as in Example 1 except that 2,000 ppm of Zr was doped when mixing and sintering the positive electrode active material precursor and the LiOH.

### Example 4

A lithium transition metal oxide was prepared in the same manner as in Example 1 except that 2,000 ppm of Zr and 2,000 ppm of Al were doped when mixing and sintering the positive electrode active material precursor and the LiOH.

### Comparative Example 1

A lithium transition metal oxide was prepared in the same manner as in Example 1 except that a separate carbon source was not added when preparing the positive electrode active material precursor.

### Comparative Example 2

A lithium transition metal oxide was prepared in the same manner as in Example 1 except that the carbon source aqueous solution was not added after the nickel cobalt manganese hydroxide was grown until an average particle diameter ($D_{50}$) thereof became 3.5 $\mu$m, but from the beginning of the reaction, a suspension of acetylene black (SB50L available from Denka Co., Ltd.) having an average particle diameter ($D_{50}$) of 50 nm as a carbon source was added at a rate of 46 mL/hr together with the transition metal containing-solution, and the reaction solution was subjected to a co-precipitation reaction for 1,620 minutes to prepare the positive electrode active material precursor. In this case, the addition amount of the carbon source was adjusted to be the same as the addition amount of the carbon source added in Example 1.

**Comparative Example 3**

A lithium transition metal oxide was prepared in the same manner as Example 1 except that the carbon source was added at a rate of 120 mL/hr.

**Comparative Example 4**

A lithium transition metal oxide was prepared in the same manner as Example 1 except that a suspension of acetylene black (SB50L available from Denka Co., Ltd.) having an average particle diameter ($D_{50}$) of 1.2 um as a carbon source was added.

**Experimental Example 1: Confirmation of Characteristics of Positive Electrode Active Material Particles**

**(1) Positive electrode active material particle size**

Each lithium transition metal oxide prepared in Examples 1 to 4 and Comparative Examples 1 to 4 above was disintegrated for 10 minutes by using a simple blender (ACM), and then introduced into a laser diffraction particle size measurement apparatus (for example, Microtrac MT 3000) and irradiated with ultrasonic waves having a frequency of about 28 kHz and an output of 60 W, and the average particle diameter ($D_{50}$) based on 50% of a particle number cumulative distribution according to the particle diameter in the measurement instrument was then calculated. The results are shown in Table 1 below.

**(2) Cavity ratio**

A cavity ratios of the particles prepared in Examples 1 to 4 and Comparative Examples 1 to 4 above, respectively, were measured through the cross-section analysis of the particle using a focused ion beam (FIB). Specifically, the lithium transition metal oxide particles in Examples 1 to 4 and Comparative Examples 1 to 4 were cut by using the FIB, and cross-sectional images were taken by a scanning electron microscope (SEM), followed by analyzing the cross-sectional images to measure the ratio of area of the total cavities with respect to the cross-sectional area of the lithium transition metal oxide particle. The measurement results are shown in Table 1 below.

**(3) BET specific surface area ($m^2$/g)**

A specific surface area of the lithium transition metal oxide particles was measured by a Brunauer-Emmett-Teller (BET) method, and specifically, the specific surface area was calculated from a nitrogen gas adsorption amount at a liquid nitrogen temperature (77 K) using BELSORP-mini II by Bell Japan Inc., the calculated values were compared with the value of Comparative Example 1, and the BET specific surface area compared to Comparative Example 1 are shown in Table 1 as a percentage [(Sample / Comparative Example 1)$\times$100].

**(4) Tap density (g/cc)**

After 50 g of each positive electrode active material precursor obtained in Examples 1 to 4 and Comparative Examples 1 to 4 was filled in a 100 cc container, a tap density of the lithium transition metal oxide particles was measured by using a tap density tester (KYT-4000 available from Seishin Co., Ltd.). The measurement results are shown in Table 1 below.

[Table 1]

|  | Positive electrode active material particle size ($D_{50}$) ($\mu$m) | Cavity ratio (%) | BET specific surface area ratio (%); Compared to Comparative Example 1 | Tap density (g/cc) |
|---|---|---|---|---|
| Example 1 | 10.2 | 11 | 116 | 1.94 |
| Example 2 | 9.7 | 16 | 140 | 1.88 |
| Example 3 | 10.3 | 11 | 121 | 1.95 |
| Example 4 | 10.2 | 12 | 118 | 1.94 |
| Comparative Example 1 (ref.) | 10.4 | 1 | 100 (ref) | 2.07 |
| Comparative Example 2 | 9.0 | 12 | 134 | 1.91 |
| Comparative Example 3 | 8.7 | 26 | 210 | 1.77 |
| Comparative Example 4 | 9.1 | 25 | 180 | 1.72 |

As shown in Table 1 above, it may be confirmed that the positive electrode active materials, which are prepared according to the method of the present invention and have a cavity ratio within 5 to 20%, in Examples 1 and 2 have a specific surface area higher than that of the positive electrode active material in Comparative Example 1 and have a tap density similar to that of Comparative Example 1.

In contrast, it may be confirmed that in the case of Comparative Example 2 in which the carbon source was added from the beginning of the reaction, the particle growth was suppressed due to the carbon source, and thus the final positive electrode active material particles were formed to have a small size, and the positive electrode active materials having a cavity ratio greater than 20% in Comparative Examples 3 and 4 had reduced tap densities.

**Experimental Example 2**

Lithium secondary batteries were prepared by using the positive electrode active materials prepared in Examples 1 to 4 and Comparative Examples 1 to 4 above, and capacity and resistance characteristics at high rate of each of lithium secondary batteries including the positive electrode active materials of Examples 1 to 4 and Comparative Examples 1 to 4 were evaluated.

Specifically, each of the positive electrode active materials prepared in Examples 1 to 4 and Comparative Examples 1 to 4, a carbon black conductive agent (FX35 available from Denka Co., Ltd.), and a polyvinylidene fluoride (PVdF) binder (KF9700 available from Kureha Co.) were mixed at a weight ratio of 96.5:1.5:2.0 in an N-methylpyrrolidone (NMP) solvent to prepare a positive electrode slurry. The positive electrode slurry was coated on one surface of an aluminum current collector, dried at 130 °C, and then rolled to prepare a positive electrode.

Meanwhile, artificial graphite, a carbon black conductive agent (SUPER C-65), and an acrylic binder (BM-L302 available from Zeon Corporation) were mixed at a weight ratio of 96:1:3 and added in water, which is a solvent, to prepare a negative electrode active material slurry. The negative electrode active material slurry was coated on a 20 um-thick copper foil, dried, and then roll-pressed to prepare a negative electrode.

Each lithium secondary battery was prepared by preparing an electrode assembly by disposing a polyethylene separator between the above-prepared positive electrode and negative electrode, disposing the electrode assembly in a battery case, and then injecting an electrolyte solution into the case. Charge/discharge efficiency of the lithium secondary batteries prepared in Examples 1 to 4 and Comparative Examples 1 to 4 above were evaluated, and the results are shown in Table 2 below.

Specifically, each lithium secondary battery of Examples 1 to 4 and Comparative Examples 1 to 4 was charged at a constant-current of 0.1 C to 4.2 V at 25 °C, and discharged at a constant-current of 0.1 C to 3 V, and then charge and discharge characteristics in a first cycle were observed. Thereafter, a capacity retention according to C-rate was measured by changing the discharge condition to 2.0 C, and a 10 sec-resistance was confirmed by discharging at a constant-current of 2.6 C at a state of charge (SOC) of 50%. The results thereof are shown in Table 2 below.

[Table 2]

|  | Charge capacity (mAh/g) | Discharge capacity (mAh/g) | 1.0C (%) | 2.0C (%) | Resistance (Ω) |
|---|---|---|---|---|---|
| Example 1 | 222.0 | 204.2 | 93.5 | 90.2 | 1.30 |
| Example 2 | 220.4 | 203.1 | 93.6 | 90.4 | 1.28 |
| Example 3 | 222.2 | 204.1 | 93.4 | 90.2 | 1.30 |
| Example 4 | 221.9 | 203.9 | 93.6 | 90.3 | 1.29 |
| Comparative Example 1 | 222.1 | 204.3 | 92.1 | 89.1 | 1.47 |
| Comparative Example 2 | 219.5 | 202.1 | 93.1 | 89.9 | 1.36 |
| Comparative Example 3 | 215.7 | 197.8 | 90.2 | 87.1 | 1.46 |
| Comparative Example 4 | 217.9 | 201.9 | 91.9 | 89.8 | 1.39 |

As shown in Table 2 above, it may be confirmed that the lithium secondary batteries of Examples 1 to 4 of the present invention have superior capacity and resistance characteristics according to C-rate to the lithium secondary batteries of Comparative Examples 1 to 4. Particularly, it may be confirmed that Comparative Example 2 shows the cavity ratio similar to Example 1 by adjusting the addition amount in order to add the same amount of the carbon source as that of Example 1, but since cavities are present not only the outside of the positive electrode active material but also the inside due to the carbon source added from the beginning of the reaction, the impregnation of the electrolyte solution is deteriorated compared to Examples 1 to 4, thereby deteriorating capacity, resistance characteristics, etc.

**Experimental Example 3**

An energy density per volume of each of the lithium secondary batteries of Examples 1 to 4 and Comparative Examples 1 to 4 prepared in Experimental Example 2 above was evaluated and the ratio of the energy density compared to Example 1 was confirmed. The energy density per volume was measured by a calculation formula as Equation (1) below.

[00151] [Equation 1]

$$\text{Energy density (Wh/L)} = \frac{\text{Nominal voltage} \times 0.1 \text{ C discharge capacity}}{\text{secondary battery cell volume}}$$

[Table 3]

|  | Ratio (%) of energy density (Wh/L) compared to Example 1 |
|---|---|
| Example 1 | 100 (Ref.) |
| Example 2 | 89.4 |
| Example 3 | 99.8 |
| Example 4 | 99.7 |
| Comparative Example 1 | 99.7 |
| Comparative Example 2 | 98.0 |
| Comparative Example 3 | 68.0 |
| Comparative Example 4 | 74.7 |

Through Table 3 above, it may be confirmed that Comparative Examples 3 and 4 having cavity ratios greater than 20% have significantly reduced energy densities. In contrast, it may be confirmed that Examples 1, 3, and 4 and Comparative Example 2 having cavity ratios of 5 to 15% have energy densities equivalent or superior to Comparative Example 1 including few cavities. It is shown that Example 2 having a cavity ratio greater than 15% have a little reduced energy density.

### Experimental Example 4

The positive electrode active material precursor particles and the positive electrode active material prepared in Example 1 and the positive electrode active material precursor particles and the positive electrode active material prepared prepared in Comparative Example 1 were cut by using the FIB, and each cross-sectional image was taken by the SEM.

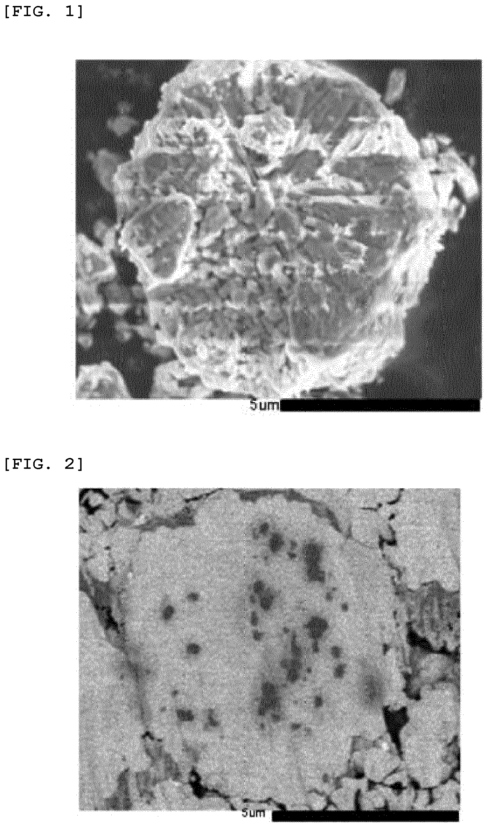

FIG. 1 shows a cross-sectional SEM photograph of the positive electrode active material precursor particle of Example 1, and FIG. 2 shows a cross-sectional SEM photograph of the positive electrode active material of Example 1.

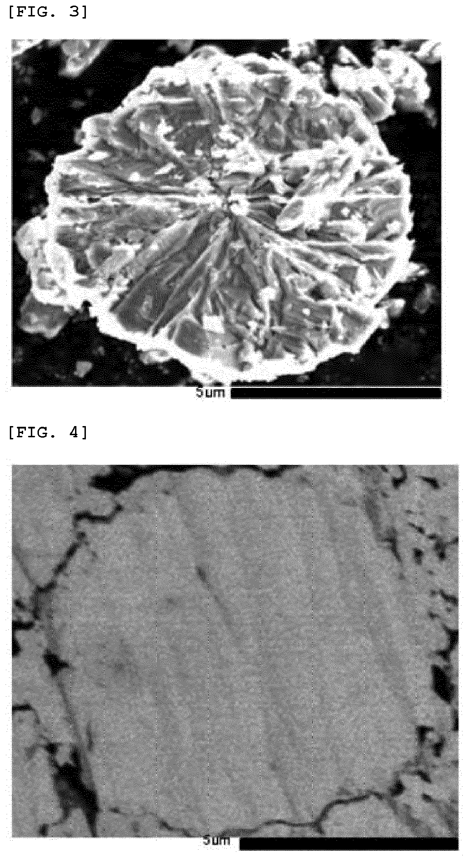

Further, FIG. 3 shows a cross-sectional SEM photograph of the positive electrode active material precursor particle prepared in Comparative Example 1, and FIG. 4 shows a cross-sectional SEM photograph of the positive electrode active material prepared in Comparative Example 1.

Through FIG. 2, it can be confirmed that cavities of several scores nm to several hundreds nm were formed on the positive electrode active material particles of Example 1 and it can be seen that the total area in which the cavities were formed accounts for about 10% of the total cross-sectional area of the positive electrode active material particles.

In contrast, in the case of the positive electrode active material particles of Comparative Example 1, the cavities were hardly formed as shown in FIG. 4.

### Claims

1. A method for preparing a positive electrode active material, comprising:

   a first step of adding to a reactor, a reaction solution comprising a transition metal-containing solution containing at least one among nickel, cobalt, and manganese, an ammonium ion-containing solution, and a basic aqueous solution to form seeds of precursor particles;
   a second step of preparing carbon-introduced precursor particles by adding a carbon source to the reactor when the precursor particles grow until an average particle diameter ($D_{50}$) of the precursor particles is 30% or greater in size of the average particle diameter ($D_{50}$) of finally prepared precursor particles; and
   a third step of mixing the carbon-introduced precursor particles and a lithium raw material and sintering the mixture at a temperature of 750 °C to 950 °C to prepare positive electrode active material particles,
   wherein the carbon introduced to the precursor particles is volatilized by the sintering in the third step to form cavities in the positive electrode active material particles, and a cavity ratio of the positive electrode active material is 5-20%,
   wherein cavities are empty spaces formed while carbon introduced to precursor particles is volatilized,
   the cavity ratio is a ratio of area for which the cavities account with respect to the cross-sectional area of the positive electrode active material particle and is measured as described in the specification,
   the carbon source is added so that the carbon compound is 20 vol% or less with respect to 100 vol% of total precursor particles, and
   the carbon compound has an average particle diameter ($D_{50}$) of 10 nm to 1 $\mu$m.

2. The method of claim 1, wherein the finally prepared precursor particles have an average particle diameter ($D_{50}$) of 2 um to 20 $\mu$m.

3. The method of claim 1, wherein when the average particle diameter ($D_{50}$) of the precursor particles is grown to 1 um to 7 um in the second step, the carbon source is added to the reactor.

4. The method of claim 1, wherein the carbon source comprises at least one carbon compound selected from the group consisting of carbon black, acetylene black, Ketjen black, channel black, furnace black, lamp black, thermal black, carbon fibers, and carbon nanotubes.

5. The method of claim 1, wherein the positive electrode active material has a cavity ratio of 5% to 15%.

6. A positive electrode active material obtainable by the method of any one of claims 1 to 5, comprising a lithium transition metal oxide, wherein the positive electrode active material comprises cavities in a region within a distance of 0.3R or more from a center of the particle when the distance from the center of the particle to the surface is R, and

   the positive electrode active material particles have a cavity ratio of 5% to 20%,
   wherein cavities are empty spaces formed while carbon introduced to precursor particles is volatilized, and the cavity ratio is a ratio of area for which the cavities account with respect to the cross-sectional area of the positive electrode active material particel and is measured as described in the specification.

7. The positive electrode active material of claim 6, wherein the cavities have a diameter of 10 nm to 1 $\mu$m.

8. The positive electrode active material of claim 6, wherein the positive electrode active material has an average particle diameter ($D_{50}$) of 2 um to 20 $\mu$m.

9. A positive electrode for a lithium secondary battery, the positive electrode comprising the positive electrode active material of claim 6.

10. A lithium secondary battery comprising the positive electrode for a lithium secondary battery according to claim 9.

**Patentansprüche**

1. Verfahren zur Herstellung eines Aktivmaterials einer positiven Elektrode, umfassend:

   einen ersten Schritt des Zugebens einer Reaktionslösung, umfassend eine übergangsmetallhaltige Lösung, welche mindestens eines von Nickel, Kobalt und Mangan enthält, eine ammoniumionenhaltige Lösung und eine basische wässrige Lösung, zu einem Reaktor, um Keime von Präkursorpartikeln zu bilden;
   einen zweiten Schritt des Herstellens Kohlenstoffeingebrachter Präkursorpartikel durch Hinzufügen einer Kohlenstoffquelle zu dem Reaktor, wenn die Präkursorpartikel wachsen bis ein durchschnittlicher Partikeldurchmesser ($D_{50}$) der Präkursorpartikel 30% oder mehr der Größe des durchschnittlichen Partikeldurchmessers ($D_{50}$) von final hergestellten Präkursorpartikeln beträgt; und
   einen dritten Schritt des Mischens der Kohlenstoffeingebrachten Präkursorpartikel und eines Lithium-Rohmaterials und Sinterns der Mischung bei einer Temperatur von 750 °C bis 950 °C, um Partikel des Aktivmaterials einer positiven Elektrode herzustellen,
   wobei der in die Präkursorpartikel eingebrachte Kohlenstoff durch das Sintern in dem dritten Schritt verflüchtigt wird, um Hohlräume in den Partikeln des Aktivmaterials einer positiven Elektrode zu bilden, und ein Hohlraumverhältnis des Aktivmaterials einer positiven Elektrode 5-20% beträgt,
   wobei Hohlräume leere Räume sind, gebildet während in Präkursorpartikel eingebrachter Kohlenstoff verflüchtigt wird,
   das Hohlraumverhältnis ein Verhältnis der Fläche für welche die Hohlräume sorgen in Bezug auf die Querschnittsfläche der Partikel des Aktivmaterials einer positiven Elektrode ist und wie in der Beschreibung angegeben gemessen wird,
   die Kohlenstoffquelle hinzugefügt wird, so dass die Kohlenstoffverbindung 20 Vol% oder weniger in Bezug auf 100 Vol% der gesamten Präkursorpartikel ausmacht, und
   die Kohlenstoffverbindung einen durchschnittlichen Partikeldurchmesser ($D_{50}$) von 10 nm bis 1 $\mu$m aufweist.

2. Verfahren gemäß Anspruch 1, wobei die final hergestellten Präkursorpartikel einen durchschnittlichen Partikeldurchmesser ($D_{50}$) von 2 $\mu$m bis 20 $\mu$m aufweisen.

3. Verfahren gemäß Anspruch 1, wobei die Kohlenstoffquelle zu dem Reaktor hinzugefügt wird, wenn der durchschnittliche Partikeldurchmesser ($D_{50}$) der Präkursorpartikel im zweiten Schritt auf 1 $\mu$m bis 7 $\mu$m gewachsen ist.

4. Verfahren gemäß Anspruch 1, wobei die Kohlenstoffquelle mindestens eine Kohlenstoffverbindung ausgewählt aus der Gruppe bestehend aus Industrieruß, Acetylenruß, Ketjenblack, Gasruß, Ofenruß, Lampenruß, Thermalruß, Kohlenstofffasern und Kohlenstoffnanoröhrchen umfasst.

5. Verfahren gemäß Anspruch 1, wobei das Aktivmaterial einer positiven Elektrode ein Hohlraumverhältnis von 5% bis 15% aufweist.

**6.** Aktivmaterial einer positiven Elektrode, herstellbar durch das Verfahren gemäß einem der Ansprüche 1 bis 5, umfassend ein Lithium-Übergangsmetalloxid, wobei das Aktivmaterial einer positiven Elektrode Hohlräume in einem Bereich innerhalb eines Abstands von 0,3R oder mehr vom Zentrum des Partikels umfasst, wenn der Abstand vom Zentrum des Partikels zur Oberfläche R ist, und

die Partikel des Aktivmaterials einer positiven Elektrode ein Hohlraumverhältnis von 5% bis 20% aufweisen, wobei Hohlräume leere Räume sind, gebildet während in Präkursorpartikel eingebrachter Kohlenstoff verflüchtigt wird, und

das Hohlraumverhältnis ein Verhältnis der Fläche für welche die Hohlräume sorgen in Bezug auf die Querschnittsfläche der Partikel des Aktivmaterials einer positiven Elektrode ist und wie in der Beschreibung angegeben gemessen wird.

**7.** Aktivmaterial einer positiven Elektrode gemäß Anspruch 6, wobei die Hohlräume einen Durchmesser von 10 nm bis 1 $\mu$m aufweisen.

**8.** Aktivmaterial einer positiven Elektrode gemäß Anspruch 6, wobei das Aktivmaterial einer positiven Elektrode einen durchschnittlichen Partikeldurchmesser ($D_{50}$) von 2 $\mu$m bis 20 $\mu$m aufweist.

**9.** Positive Elektrode für eine Lithium-Sekundärbatterie, die positive Elektrode umfassend das Aktivmaterial einer positiven Elektrode gemäß Anspruch 6.

**10.** Lithium-Sekundärbatterie, umfassend die positive Elektrode für eine Lithium-Sekundärbatterie gemäß Anspruch 9.

**Revendications**

**1.** Procédé de préparation d'un matériau actif d'électrode positive, comprenant :

une première étape d'ajout à un réacteur d'une solution réactionnelle comprenant une solution contenant un métal de transition contenant au moins un parmi du nickel, du cobalt et du manganèse, une solution contenant des ions ammonium et une solution aqueuse basique pour former des germes de particules de précurseur ;
une deuxième étape de préparation de particules de précurseur contenant du carbone en ajoutant une source de carbone au réacteur lorsque les particules de précurseur croissent jusqu'à ce qu'un diamètre de particule moyen ($D_{50}$) des particules de précurseur soit de 30 % ou plus en taille du diamètre de particule moyen ($D_{50}$) de particules de précurseur finalement préparées ; et
une troisième étape consistant à mélanger les particules de précurseur contenant du carbone et une matière première de lithium et à fritter le mélange à une température de 750 °C à 950 °C pour préparer des particules de matériau actif d'électrode positive,
dans lequel le carbone introduit dans les particules de précurseur est volatilisé par le frittage dans la troisième étape pour former des cavités dans les particules de matériau actif d'électrode positive, et un rapport de cavité du matériau actif d'électrode positive est de 5-20 %,
dans lequel les cavités sont des espaces vides formés pendant que du carbone introduit dans les particules de précurseur est volatilisé,
le rapport de cavité est un rapport d'aire pour lequel les cavités comptent par rapport à l'aire de section transversale de la particule de matériau actif d'électrode positive et est mesuré comme décrit dans la spécification,
la source de carbone est ajoutée de sorte que le composé de carbone représente 20 % en volume ou moins par rapport à 100 % en volume de particules de précurseur totales, et
le composé de carbone présente un diamètre de particule moyen ($D_{50}$) de 10 nm à 1 $\mu$m.

**2.** Procédé selon la revendication 1, dans lequel les particules de précurseur finalement préparées présentent un diamètre de particule moyen ($D_{50}$) de 2 $\mu$m à 20 $\mu$m.

**3.** Procédé selon la revendication 1, dans lequel lorsque le diamètre de particule moyen ($D_{50}$) des particules de précurseur croît à 1 $\mu$m à 7 $\mu$m dans la deuxième étape, la source de carbone est ajoutée au réacteur.

**4.** Procédé selon la revendication 1, dans lequel la source de carbone comprend au moins un composé de carbone sélectionné à partir du groupe constitué de noir de carbone, noir d'acétylène, noir de Ketjen, noir de canal, noir de fournaise, noir de lampe, noir thermique, fibres de carbone et nanotubes de carbone.

**5.** Procédé selon la revendication 1, dans lequel le matériau actif d'électrode positive présente un rapport de cavité de 5 % à 15 %.

**6.** Matériau actif d'électrode positive pouvant être obtenu par le procédé de l'une quelconque des revendications 1 à 5, comprenant un oxyde de métal de transition de lithium, dans lequel le matériau actif d'électrode positive comprend des cavités dans une région à une distance de 0,3R ou plus d'un centre de la particule lorsque la distance entre le centre de la particule et la surface est R, et

les particules de matériau actif d'électrode positive présentent un taux de cavité de 5 % à 20 %,
dans lequel les cavités sont des espaces vides formés pendant que du carbone introduit dans les particules de précurseur est volatilisé, et
le rapport de cavité est un rapport d'aire pour lequel les cavités comptent par rapport à l'aire de section transversale de la particule de matériau actif d'électrode positive et est mesuré comme décrit dans la spécification.

**7.** Matériau actif d'électrode positive selon la revendication 6, dans lequel les cavités présentent un diamètre de 10 nm à 1 $\mu$m.

**8.** Matériau actif d'électrode positive selon la revendication 6, dans lequel le matériau actif d'électrode positive présente un diamètre de particule moyen ($D_{50}$) de 2 $\mu$m à 20 $\mu$m.

**9.** Électrode positive pour une batterie secondaire au lithium, l'électrode positive comprenant le matériau actif d'électrode positive selon la revendication 6.

**10.** Batterie secondaire au lithium comprenant l'électrode positive pour une batterie secondaire au lithium selon la revendication 9.

[FIG. 1]

[FIG. 2]

[FIG. 3]

[FIG. 4]

**EP 3 909 916 B1**

**REFERENCES CITED IN THE DESCRIPTION**

**Patent documents cited in the description**

- KR 1395846
- KR 20120027707 A
- KR 20160118081 A